# EUROPEAN PATENT APPLICATION

(11) **EP 2 957 946 A1**
(43) Date of publication of application: **23.12.2015**
(21) Application number: 14172488.0
(22) Date of filing: 16.06.2014
(51) Int. Cl.: G02B 27/01

(54) **Image generating unit for a Head-up display and Head-up display**

(71) Applicant: Johnson Controls GmbH, 51399 Burscheid (DE)
(72) Inventor: Andreev, Dimitar, 1013 Sofia (BG)
(74) Representative: Finger, Catrin

(57) **Abstract**

The invention relates to an image generating unit (2) for a head-up display (1) comprising:
- a light module (2.1) comprising at least one light source (2.1.1) adapted to emit light and at least one optical element (2.1.2, 2.1.3) adapted to direct the emitted light towards a display module (2.2) and
- the display module (2.2) adapted to form an image based on the incident light from the light module (2.1) and to project the image into a field view of a user,
whereby the display module (2.2) is rotatable around a transversal axis (A) with respect to the light module (2.1) so as to adjust the position of the projected image within the field view of a user.

Furthermore, the invention relates to a head-up display (1) comprising:
- an image generating unit (2) and
- a combiner (4) for displaying the projected image in a field view of a user.

## Description

The invention relates to an image generating unit for a head-up display. The invention further relates to a head-up display comprising such an image generating unit device.

Head-up displays are devices which transparently display information into a view field of a user, basically without obscuring the scene within that view field so that the user may remain focused on that scene and also acquire displayed information. Head-up displays may for example be used in vehicles or aircrafts. There exist a variety of kinds of head-up displays that differ in using optical paths of light.

It is an object of the present invention to provide an improved image generating unit for a head-up display and an improved head-up display.

The object is achieved by an image generating unit according to claim 1 and by a head up display according to claim 9.

Preferred embodiments of the invention are given in the dependent claims.

An image generating unit for a head-up display comprises a light module comprising at least one light source that is adapted to emit light and an optical element that is adapted to direct the emitted light towards a display module and the display module adapted to form an image based on the incident light from the light module and to project the image into a view field of a user. According to the invention, the display module is rotatable around a transversal axis with respect to the light module so as to adjust the position of the projected image within the field view of a user. Preferably, the transversal axis is substantially perpendicular to a direction of the incident light directed by the at least one optical element.

The rotatable display module enables the image generating unit to couple with a variety of head-up displays using different optical paths. Rotating the display module means to mechanically tilt the display module at a certain angle. Thus, a position of the projected image formed by the display module is adjustable regarding the optical path used by the head-up display. Preferably, the display module is rotatable and thus adjustable before an assembly of the head-up display. Additionally, the display module may be manually operated by a user.

In a preferred embodiment, the optical element comprises at least one collimator and/or at least one reflector. The collimator collimates the light emitted by the at least one light source. The at least one light source may comprise one or three light emitting diodes (LEDs) that are high speed controlled and multiplexed so as to sequentially emit light in order to sequentially generate images in the respective basic colour, e.g. red, green or blue, at such a rate that the inertia of the human vision creates the impression of a colour picture mixed by the three colours. The reflector directs the light towards the collimator or directly towards the display module in case that the optical element comprises only the reflector.

The display module comprises a display unit and at least one optical filter. The optical filter is designed such that only the light emitted by the light source and thus the image formed by the display module are projected in the direction of the view field, whereas ambient light is absorbed, transmitted or reflected in a direction other than the view field. Thereby, the optical filter may be formed of a photo-active, and / or photorefractive material, for example a polymer.

In a preferred embodiment, the light module and the display module are mechanically coupled to each other by at least one bridge element. Thus, the image generating unit is designed as a one piece module. This fact leads to a more easy assembly and replacement of the head-up display and/or the image generating unit as a component of the head-up display according to conventional head-up display. Furthermore, the bridge element acts as a distance keeper between the light module and the display module. The space between the light module and the display module generates a ventilation pocket in order to decrease a temperature between the light module and the display module. Hence, the display unit is protected against overheating that may damage the display unit.

Preferably, the light module comprises at least one control unit adapted to control the at least one light source. In particular, the control unit is arranged to adapt a brightness of the image depending on the ambient light conditions. The brightness of the image may be adapted by adjusting an input power of the light sources, thereby controlling the power of the emitted light.

Furthermore, the light module comprises at least one radiator adapted to decrease a temperature of the at least one light source and/or to decrease a temperature in an environment of the at least one light source to protect the display module. Therefore, the radiator is made of a good heat conducting material, which can be cooled.

According to the invention, there is provided a head-up display comprising an image generating unit as it is described above and a combiner for displaying the projected image in a view field of a user.

As opposed to conventional head-up displays using image generating devices with a fixed display module, costs of production, assembly and replacement of the head-up display are considerably decreasable.

The combiner of the head-up display is a transparent component arranged or arrangeable in the field of view of a user, e.g. a driver of the vehicle. The combiner may be made of glass or of plastics, e.g. optical grade polycarbonate, cyclic olefin copolymer or cyclo-olefin polymer. Additionally, the combiner may comprise an optically effective coating. The coating may be arranged for enhancing the reflectivity of the combiner in the visible spectrum.

The combiner may be a windshield of a vehicle or a separate transparent component arranged or arrangeable in the field of view of the user. In the latter case, the head-up display may comprise one or more drive units or kinematic modules which may electrically, pneumatically or hydraulically move the combiner into and out of the field of view. This movement may be controlled by user operation and/or automatically, e.g. if important information such as engine problems, low oil or coolant pressure or level etc. are to be brought to the user's attention.

In an embodiment of the invention at least one mirror may be arranged for folding the optical path between the display module and the combiner. This allows for a compact design of the head-up display in complex installation situations. The mirror may be arranged fixed or may be manually operated by a user.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### Brief Description of the Drawings

The present invention will become more fully understood from the detailed description given hereinbelow and the accompanying drawings which are given by way of illustration only, and thus, are not limitative of the present invention, and wherein:
- Figure 1: shows schematically a perspective view of a head-up display comprising an image generating unit, a mirror device and a combiner,
- Figure 2: shows schematically a side view of the image generating unit according to the invention and
- Figure 3: shows schematically a further side view of the image generating unit according to the invention.

Corresponding parts are marked with the same reference symbols in all figures.

### Detailed Description of Preferred Embodiments

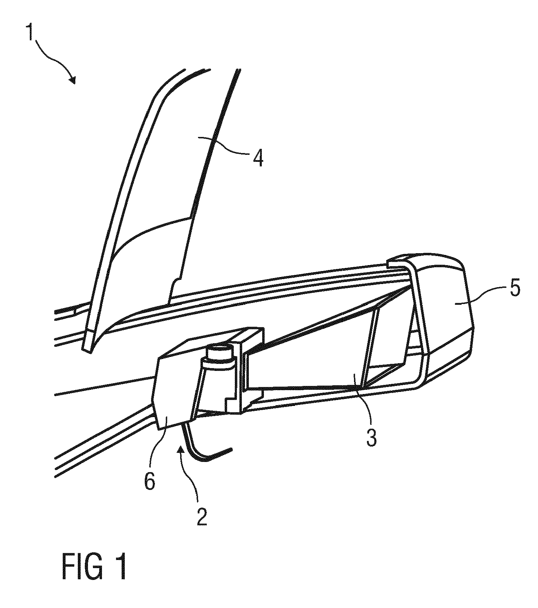

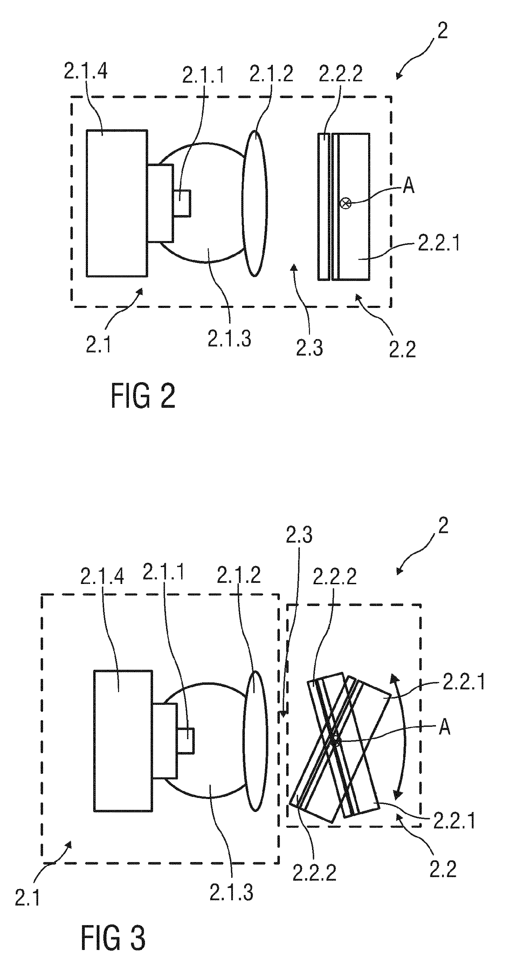

**Figure 1** shows a perspective view of a head-up display 1 comprising an image generating unit 2, a mirror device 3 and a combiner 4, whereby the image generating unit 2 and the mirror device 4 are shown by a cut out of an outer housing 5 of the head-up display 1. The Figures 2 and 3 show different schematic side views of the image generating unit 2 according to the invention.

The image generating unit 2 is arranged within an inner housing 6 and comprises two components, in particular a light module 2.1 and a display module 2.2 that are mechanically coupled to each other by one or two not shown bridge elements, i. e laterally projecting elements made of the same material as the inner housing 6. The bridge element acts as a distance keeper between the light module 2.1 and the display module 2.2. The space between the light module 2.1 and the display module 2.2 generates a ventilation pocket 2.3 in order to decrease a temperature between the light module 2.1 and the display module 2.2 in order to protect the components of the display module 2.2 against overheating.

The light module 2.1 comprises a light source 2.1.1, a collimator 2.1.2, a reflector 2.1.3 and a radiator 2.1.4. The light module 2.1 is arranged fixed on the inner housing 6.

The light source 2.1.1 may comprise one or three light emitting diodes, each one arranged to emit light in one of the basic colours red, green or blue, wherein the basic colour of each light emitting diode is different from the basic colour of the others.

The collimator 2.1.2 narrows the light emitted by the light source 2.1.1 in a manner that the emitted light is focused towards the display module 2.2. The collimator 2.1.2 may consist of a curved mirror or lens in order to achieve a homogeneous light distribution. The reflector 2.1.3 reflects the emitted light towards the collimator 2.1.2. The reflector 2 may comprise a Fresnel-lense and/or a mirror.

The radiator 2.1.4 is arranged to decrease a temperature of the light source 2.1.1 and/or a temperature in an immediate environment of the light source 2.1.1. Therefore, the radiator 2.1.4 is made of a good heat conducting material, which may couple to a cooling medium.

Furthermore, the light module 2.1 comprises a not shown control unit that is coupled with the light source 2.1.1 for multiplexing the light emitting diodes so as to sequentially emit light thus creating a field-sequential colour system, whereby the emitted light is directed towards the display module 2.2 to form an image.

The display module 2.2 comprises a display unit 2.2.1 and an optical filter 2.2.2. Here, the narrowed light is applied to the display unit, i. e. in the form of a light transmissive liquid crystal display. For example, the display unit 2.2.1 is designed as a thin film transistor - display (TFT - display). The display unit 2.2.1 forms an image based on the incident light from the light source 2.1 and projects the image towards the mirror device 3 or in case of that the head-up display 1 comprises no mirror device 3 directly towards the combiner 4.

The optical filter 2.2.2 is arranged faced towards the light source 2.1.1 so as to avoid or at least minimize incident sunlight and/or ambient light, thus no secondary image or phantom image are generated. Thereby, the optical filter 2.2.2 may be formed of a photo-active, and / or photorefractive material, for example a polymer.

The display unit 2.2.1 and the optical filter 2.2.2 may be designed as one piece that is rotatable around a transversal axis A with respect to the fixed light module 2.1, whereby the transversal axis A is substantially perpendicular to a direction of incident light from the light module 2.1. The rotation of the display module 2.2 is shown in figure 3.

By rotation of the display module 2.2, the display module 2.2 is tilted in a certain angle for adjusting the position of the projected image within a view field of a user, e. g. a driver of a vehicle. Different head-up displays may differ in the optical path of the projected image.

According to the present embodiment shown in figure 1, the head-up display 1 comprises the mirror device 3 that folds the optical path of the projected image. Therefore, the mirror device 3 may be flat, concave or convex in order to adjust the size of the projected image and may be made of plastics or glass. In another not shown embodiment, the head-up display 1 may comprise no mirror device 3 so that the image is directly projected towards the combiner 4. With the rotatable display module 2.2, the image generating unit 2 is universally applicable for a variety of head-up displays using different optical paths.

The projected image is magnified by the combiner 4 or with other words reflected by the combiner 4 such that the user perceives the image at a distance behind the combiner 4. In particular, the combiner 4 reflects the image, for example carrying visual vehicle data and status information for display to an occupant of the vehicle as the occupant views the outside world scene through the windshield.

In this case the combiner 4, although basically transparent, is arranged as a mirror, however with a reflectance considerably below total reflection. The combiner 4 may be flat, convex, concave or free-form and made of plastics or glass and be equipped with an optically effective coating. A drive unit or kinematic may be arranged for selectively moving, e.g. folding the combiner 4 into or out of the field of view. Alternatively, the combiner 4 is a windshield of a vehicle.

### List of References

- 1: head-up display
- 2: image generating unit
- 2.1: light module
- 2.1.1: light source
- 2.1.2: collimator
- 2.1.3: reflector
- 2.1.4: radiator
- 2.2: display module
- 2.2.1: display unit
- 2.2.2: optical filter
- 2.3: ventilation pocket
- 3: mirror device
- 4: combiner
- 5: outer housing
- 6: inner housing

- A: transversal axis

## Claims

1. Image generating unit (2) for a head-up display (1) comprising:
- a light module (2.1) comprising at least one light source (2.1.1) adapted to emit light and at least one optical element (2.1.2, 2.1.3) adapted to direct the emitted light towards a display module (2.2) and
- the display module (2.2) adapted to form an image based on the incident light from the light module (2.1) and to project the image into a view field of a user,
**characterized in that** the display module (2.2) is rotatable around a transversal axis (A) with respect to the light module (2.1) so as to adjust the position of the projected image within the view field of a user.

2. Image generating unit (2) according to claim 1,
**characterized in that** the transversal axis (A) is substantially perpendicular to a direction of the incident light that is directed by the at least one optical element (2.1.2, 2.1.3).

3. Image generating unit (2) according to one of the preceding claims,
**characterized in that** the at least one optical element (2.1.2, 2.1.3) comprises at least one collimator (2.1.2) and/or at least one reflector (2.1.3).

4. Image generating unit (2) according to one of the preceding claims,
**characterized in that** the display module (2.2) comprises a display unit (2.2.1) and at least one optical filter (2.2.2).

5. Image generating unit (2) according to one of the preceding claims,
**characterized in that** the light module (2.1) and the display module (2.2) are mechanically coupled to each other by at least one bridge element.

6. Image generating unit (2) according to claim 5,
**characterized in that** the bridge element generates a ventilation pocket (2.3) between the light module (2.1) and the display module (2.2).

7. Image generating unit (2) according to one of the preceding claims,
**characterized in that** the light module (2.1) comprises at least one control unit adapted to control the at least one light source (2.1.1).

8. Image generating unit (2) according to one of the preceding claims,
**characterized in that** the light module (2.1) comprises at least one radiator (2.1.4) adapted to decrease a temperature of the at least one light source (2.1.1) and/or to decrease a temperature in an environment of the at least one light source (2.1.1).

9. Head-up display (1) comprising:
- an image generating unit (2) according to one of the claims 1 to 7 and
- a combiner (4) for displaying the projected image in the view field of a user.

10. Head-up display (1) according to claim 8,
**characterized in that** the combiner (4) is a transparent component arranged or arrangeable in the view field of a user.

11. Head-up display (1) according to claim 8 or 9,
**characterized in that** the combiner (4) is a windshield of a vehicle.

12. Head-up display (1) according to claim 8 or 9,
**characterized in that** the combiner (4) is a transparent component that is movable into or out of the field of view.

13. Head-up display (1) according to one of the claims 8 to 11,
**characterized by** comprising at least one mirror device (3) that is adapted to fold an optical path between the display module (2.2) and the combiner (4).
